Europäisches Patentamt

European Patent Office

Office européen des brevets

(11) Veröffentlichungsnummer: **0 221 524 B1**

# EUROPÄISCHE PATENTSCHRIFT

(45) Veröffentlichungstag der Patentschrift: **27.12.91**

(51) Int. Cl.⁵: **B65H 20/16, B29C 55/00**

(21) Anmeldenummer: **86115183.5**

(22) Anmeldetag: **03.11.86**

(54) **Durchzugsanordnung für Folien.**

(30) Priorität: **08.11.85 DE 3539591**

(43) Veröffentlichungstag der Anmeldung:
**13.05.87 Patentblatt 87/20**

(45) Bekanntmachung des Hinweises auf die
Patenterteilung:
**27.12.91 Patentblatt 91/52**

(84) Benannte Vertragsstaaten:
**DE FR GB LU NL**

(56) Entgegenhaltungen:
**EP-A- 0 038 450**    **DE-A- 1 629 270**
**DE-B- 1 163 006**    **DE-B- 1 199 484**
**DE-B- 2 402 768**    **US-A- 3 127 079**

(73) Patentinhaber: **HOECHST AKTIENGESELL-
SCHAFT**
**Postfach 80 03 20**
**W-6230 Frankfurt am Main 80(DE)**

(72) Erfinder: **Caroselli, Hellmut**
**Alban-Köhler-Strasse 8**
**W-6200 Wiesbaden(DE)**

## Beschreibung

Die Erfindung betrifft eine Durchzugsanordnung für Folien, die durch zumindest eine Längsstreckanlage für Folien, bestehend aus angetriebenen, stationären Walzen und angetriebenen, hochgefahrenden Hubwalzen, bei umlaufenden Walzen hindurchtransportiert wird.

Die steigenden Anforderungen an die Wirtschaftlichkeit von Folienanlagen, in denen eine Rohfolie längs- und quergestreckt wird, erfordern laufend höhere Funktionsgeschwindigkeiten, größere Bahnbreiten und absolute Sauberkeit innerhalb der Folienanlage. Für den Durchzug von Folien durch die Längsstreckanlage einer Folienverarbeitungsmaschine sind Durchzugsvorrichtungen mit parallel zu den Stirnseiten der Walzen umlaufenden Seilen bekannt, desweiteren anstelle von parallel umlaufenden Seilen geführte Ketten, welche die Durchzugsvorrichtung durch das Folienlängsstreckwerk transportieren. Bei geringeren Breiten der Folienbahn ist auch ein manuelles Hindurchführen der Folienbahn bei stillstehenden Walzen möglich.

Das Durchführen der Folienbahn durch die Längsstreckanlage ist nach einer Unterbrechung des Produktionsablaufes, beim neuen Anfahren der Maschine, nach Bahnrissen, nach einem Walzenwechsel, nach Umstellung der Produktionsgeschwindigkeit usw. erforderlich.

Aus dem Dokument EP-A - 0 038 450 ist eine Einzugsvorrichtung für eine Papierbahn, die in eine Rollenrotationsdruckmaschine befördert wird, bekannt, bei der ein Zugseil entlang des Einzugsweges in einer rohrförmigen Führung verschiebbar ist. Das Zugseil ist mit einem aus einem Schlitz der rohrförmigen Führung herausragenden Schlepphaken für die Papierbahn verbunden. Der Antrieb des Zugseils erfolgt durch ein oder mehrere Reibräder. Das Zugseil ist nach allen Seiten annähernd gleichweit biegbar, so daß keine Einengung der möglichen Einzugswege durch die Form des Zugseils entsteht. Am Umfang der Reibräder befinden sich halbkreisförmige Vertiefungen für die Zugseilführung. Die Reibräder werden durch einen Motor über Zahnräder angetrieben.

Aus der DE-B 11 63 006 ist eine Vorrichtung zum Einführen einer Kunststoffbahn in eine Längsreckanlage bekannt, mit deren Hilfe die waagerecht verlaufende Kunststoffbahn in die Beschickstellung der Anlage zwischen zwei in der Höhe gegeneinander verstellbare Gruppen achsparalleler Walzen hindurchführbar ist. Auf der Bahnaustrittsseite der Reckanlage außerhalb der maximalen Bahnbreite und zu beiden Seiten der Anlage sind in Längsrichtung hochkant angeordnete und auf Trommeln aufwickelbare Stahlbänder vorhanden, die zwischen den beiden Walzengruppen zur Bahneintrittsseite verschiebbar sind. Bei dem Zurückgehen der Stahlbänder wird die Kunststoffbahn mittels einer die vorderen Enden der Stahlbänder verbindenden Mitnehmereinrichtung zwischen den Walzengruppen hindurchgezogen. Die Walzen sind an ihren Enden mit Rillen zur Führung der Stahlbänder versehen. Den beiden Stahlbändern sind gemeinsam angetriebene Antriebsrollen mit jeweils einer Anpreßrolle zugeordnet.

Bei der Überführung von Papierbahnen bzw. Papierbögen zwischen bestimmten Abschnitten einer Papiermaschine ist das Airlift[R]-System bekannt, das eine Luftströmung mit großer Strömungsgeschwindigkeit erzeugt, wodurch die Papierbahn zwangsgeführt wird. Durch die hohe Strömungsgeschwindigkeit wird die Umgebungsluft angesaugt und die Papierbahn schmiegt sich eng an eine gekrümmte Oberfläche eines speziellen Führungsabschnittes des Transportweges an, wodurch das Ende der Papierbahn gegen den Bereich der hohen Strömungsgeschwindigkeit gezogen und somit zwangsgeführt wird.

Bekannte mechanische Durchzugsvorrichtungen sind im allgemeinen nur für Bandgeschwindigkeiten der Folien bis zu 100 m/min geeignet. Bei höheren Geschwindigkeiten steigt ihre Stör- und Schmutzanfälligkeit und werden sie vor allem unfallträchtig für das Bedienungspersonal. Ein weiterer Nachteil ist der große konstruktive Aufwand, wie beispielsweise umlaufende Seile oder Ketten zu beiden Seiten der Walzen, welche die Greifer, die das Folienband während des Durchzugs durch das Folienstreckwerk festhalten, transportieren.

Aufgabe der Erfindung ist es, eine Durchzugsanordnung für ein Folienband so zu verbessern, daß sie für Bandgeschwindigkeiten bis zu 250 m/min bei geringem konstruktiven Aufwand geeignet ist, weitgehend stör- und schmutzfrei arbeitet und große Sicherheit gegen Unfälle des Bedienungspersonals bietet.

Diese Aufgabe wird erfindungsgemäß durch eine Durchzugsanordnung nach dem Oberbegriff des ersten Patentanspruchs in der Weise gelöst, daß alle Walzen und Hubwalzen der Längsstreckanlage an derselben ihrer Stirnseiten mit einer Einzugsscheibe ausgerüstet sind, daß bei hochgefahrenen Hubwalzen die Rillen der Einzugsscheiben einen offenen Durchzugskanal für eine Durchzugsvorrichtung bilden, die aus einem elastischen Stab mit einem lösbar befestigten Klemmteil besteht und daß die Länge des Stabes größer als der Abstand zweier benachbarter Walzen ist, so daß der Stab durch Haftreibung mit den umlaufenden Walzen durch die Längsstreckanlage transportiert wird.

In Ausgestaltung der Erfindung weist der Stab ein mit Gummi überzogenes Kunststoffrohr auf, in dem ein Gewindestück befestigt ist, in das das Klemmteil eingeschraubt ist, das Klemmelemente und/oder Feder und/oder Eingabespalte umfaßt, und es sind die Klemmelemente so angeordnet, daß sie eine in das Klemmteil eingeschobene Folienbahn während des Transports des Stabes durch die Längsstreckanlage selbsthemmend bzw. federbelastet festklemmen.

In einer Ausführungsform der Erfindung weist das zylindrische Klemmteil einen seitlichen Eingabespalt auf, der zur Stirnfläche des Klemmteils hin konisch aufgeweitet ist und parallel zur Längsmittellinie des Stabes verläuft und zweigt von dem Eingabespalt bei waagerechter Lage des Stabes schräg nach oben eine Nut ab, in der zwei Rollen angeordnet sind, die entlang der schiefen Ebene der Nut abrollen, wobei in waagerechter Lage des Stabes die untere Rolle von der oberen Rolle unter Schwerkrafteinfluß gegen die Grundfläche des Eingabespalts gedrückt ist.

Weiterbildungen der Erfindung ergeben sich aus den Merkmalen der übrigen Patentansprüche 4 bis 17.

Bei der Durchzugsanordnung nach der Erfindung sind während des Durchzugs der Folie durch die Streckanlage alle Walzen angetrieben und die Hubwalzen gegenüber den stationären Walzen so weit hochgefahren, daß die Rillen der Einzugsscheiben der Hubwalzen die Oberseite und die Rillen der Einzugsscheiben der stationären unteren Walzen die Unterseite der Transportbahn für den elastischen Stab in einer Weise begrenzen, daß dieser nur durch leichtes Knicken seines Kunststoffrohrs während der Vorwärtsbewegung zwischen den begrenzenden Walzen weiterbefördert werden kann. Mit der Erfindung werden die Vorteile erzielt, daß die Längsstreckanlage in kürzester Zeit für den Einzug bzw. den Durchzug der Folienbahn bereitsteht, daß ein Aufstauen der ankommenden Folienbahn bei der Eingabe in die bzw. bei der Ausgabe aus der Längsstreckanlage nicht auftritt, daß das Einziehen ohne Veränderung der Produktionsgeschwindigkeit erfolgen kann und daß eine sehr hohe Einzugsgeschwindigkeit bis zu 250 m/min möglich ist. Weitere Vorteile bestehen darin, daß die Durchzugsanordnung für alle gängigen Foliendicken geeignet ist, keine mechanischen Teile für den Durchzug innerhalb der Streckanlage vorhanden sind, wodurch hohe Sauberkeit, weitgehende Verschleißfreiheit und ein schneller Walzenwechsel ermöglicht werden. Ebenso ist die Unfallgefahr nahezu Null, da das Bedienungspersonal nie mit der Hand in den Bereich des Spaltes zwischen den einziehenden Walzen gelangt. Im Vergleich dazu besteht bei Einziehen von Hand aus oder bei der Reinigung der Walzen bei einem Folienstau innerhalb der Längsstreckanlage stets eine erhöhte Unfallgefahr.

Ein weiterer Vorteil der Erfindung ergibt sich dadurch, daß bei Abriß der Folienbahn innerhalb der Längsstreckanlage jede zweite Walze als Hubwalze ausgebildet ist und hochgefahren werden kann, wodurch die einzelnen Walzen leicht zugänglich werden und Beschädigungen durch Aufwickeln der Folienbahn um einzelne Walzen infolge des Abrisses vermieden werden.

Die Erfindung wird im folgenden anhand von zeichnerisch dargestellten Ausführungsbeispielen näher erläutert.

Es zeigen:

Fig. 1a
eine schematische Seitenansicht einer Längsstreckanlage für Folien,

Fig. 1b
eine Ansicht eines Seitenständers der Längsstreckanlage und von zwei im Seitenständer gelagerten Walzen,

Fig. 2a
einen Längsschnitt durch eine Durchzugsvorrichtung nach der Erfindung,

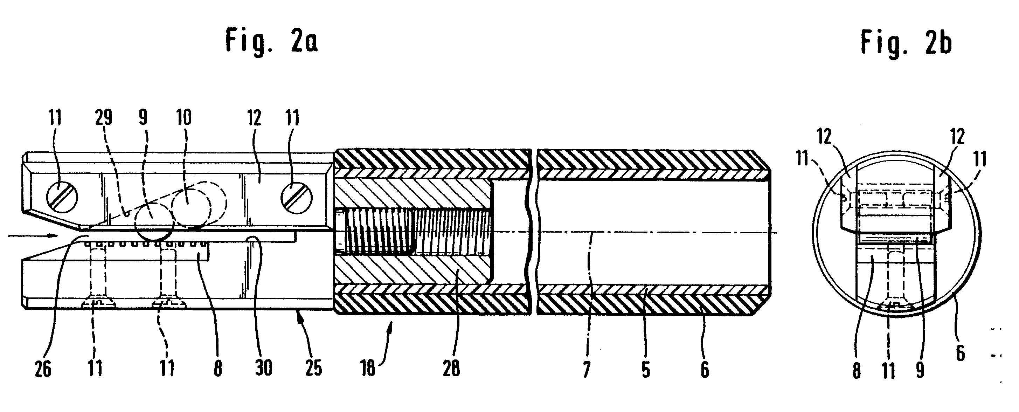

Fig. 2b
eine Seitenansicht der Durchzugsvorrichtung nach Fig. 2a,

Fig. 3a
eine andere Ausführungsform der Durchzugsvorrichtung nach der Erfindung in geschnittener Längsansicht,

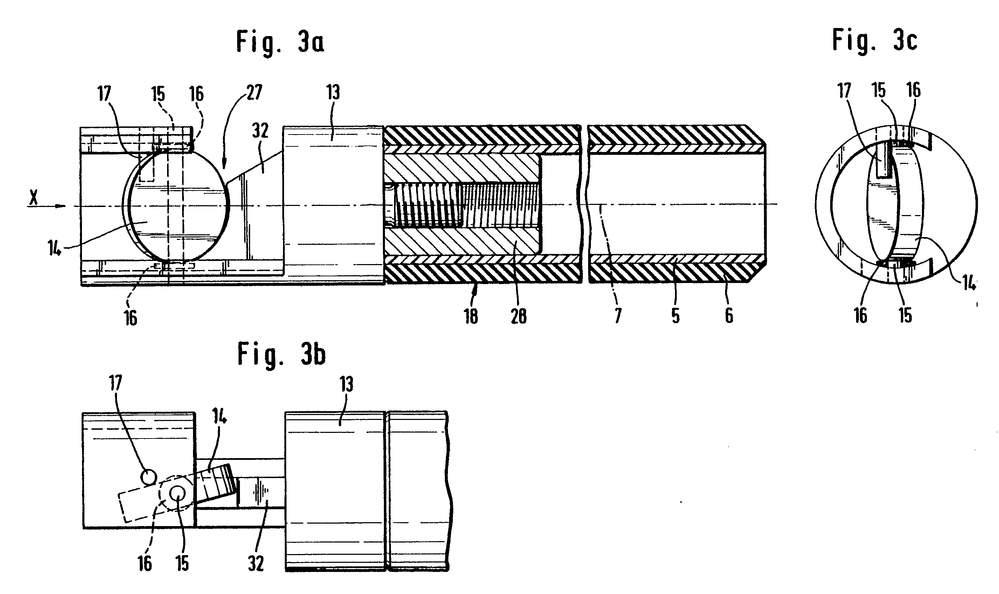

Fig. 3b
eine Draufsicht auf das Klemmteil der Durchzugsvorrichtung nach Fig. 3a,

Fig. 3c
eine Seitenansicht des Klemmteils der Durchzugsvorrichtung nach Fig. 3a,

Fig. 4
eine schematische Darstellung einer Einzugsvorrichtung für die Durchzugsvorrichtung nach der Erfindung,

Fig. 5a bis 5c
in schematischer Darstellung Klemmteile von Durchzugsvorrichtungen nach der Erfindung für dickere Folien und

Fig. 6a und 6b
schematische Darstellungen der Klemmteile von Durchzugsvorrichtungen nach der Erfindung für dünnere Folien.

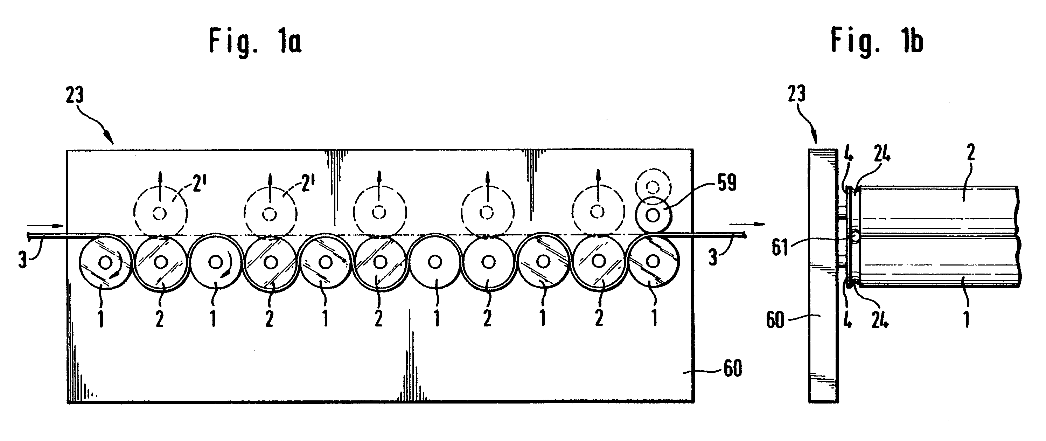

Fig. 1 zeigt schematisch eine Längsstreckanlage 23 für Folien mit stationären, Walzen 1 und Hubwalzen 2, die von der Folienbahn 3 umschlungen sind. Der Verlauf der Folienbahn 3 zwischen den Walzen 1 und 2 während der Produktion ist in voller Linie eingezeichnet, während der Verlauf der Folienbahn 3 während ihres Einzuges bzw. Durchzuges durch die Längsstreckanlage strichpunktiert gezeichnet ist. Sowohl die stationären Walzen 1 als auch die Hubwalzen 2 sind angetrieben. Während der Produktion sind die Walzen 1 und 2 nebeneinander angeordnet, wobei die Folienbahn 3 die stationären Walzen 1 jeweils von oben und die Hubwalzen 2 jeweils von unten umschlingt. Zusätzlich befinden sich in der Längsstreckanlage noch Nipwalzen 59, von denen eine gezeigt ist, die während der Produktion einzelnen stationären Walzen gegenüberliegen und mit diesen einen Durchgangsspalt für die Folienbahn 3 bilden. Werden die Hubwalzen 2 hochgefahren, so werden auch die Nipwalzen 59 hochgefahren. Die Hubwalzen sind in ihrer Produktionsstellung mit vollen Linien eingezeichnet und in ihrer angehobenen Stellung gestrichelt dargestellt.

In der Durchzugsstellung für die Folienbahn 3 sind alle Hubwalzen 2, die von der Folienbahn 3, wie schon erwähnt, von unten umschlungen werden, um eine vorgegebene Hubhöhe hochgefahren. Die Durchmesser der Walzen 1 und 2 sind gleichgroß und die Hubhöhe der Hubwalzen 2 ist geringfügig kleiner als der Walzendurchmesser, beispielsweise kann die Hubhöhe gleich dem Walzendurchmesser minus 2 mm sein. Die Geschwindigkeiten aller Walzen werden in der Durchzugsstellung der Längsstreckanlage auf Gleichlauf gebracht, wobei die Unterschiede der Geschwindigkeiten einzelner Walzen untereinander kleiner bzw. gleich ± 2% geregelt werden. Während der Produktion sind die Geschwindigkeiten einzelner Walzengruppen innerhalb der Längsstreckanlage bekannterweise unterschiedlich, da durch die im hinteren Abschnitt der Längsstreckanlage ansteigenden Umlaufgeschwindigkeiten der Walzen die Längsstreckung der Folienbahn 3 erfolgt. Die Durchmesser der Walzen 1 und 2 können untereinander auch unterschiedlich groß sein.

Wie aus Fig. 1b ersichtlich ist, weist sowohl jede stationäre Walze 1 wie auch jede Hubwalze 2 an einer der Stirnseiten eine Einzugsscheibe 4 auf, die eine Rille 24 für das Durchlaufen einer Durchzugsvorrichtung in Gestalt eines elastischen Stabes 18, wie in Fig. 2a gezeigt, besitzt. In Fig. 1b ist eine Seitenansicht eines Seitenständers 60 der Längsstreckanlage sowie von Teilen einer stationären Walze 1 und einer hochgefahrenen Hubwalze 2 dargestellt. Sowohl die Walze 1 als auch die Hubwalze 2 ist an der einen Stirnseite mit einer Einzugsscheibe 4 ausgerüstet, die eine Rille 24 für das Durchlaufen einer Durchzugsvorrichtung, beispielsweise in Gestalt eines elastischen Stabes 18 (vgl. Fig. 2a), aufweist.

Alle Walzen 1 und 2 sind an der einen Stirnseite mit einer Einzugsscheibe 4 mit eingefräster Rille 24 ausgerüstet. Die Einzugsscheiben 4 besitzen den gleichen Durchmesser wie die Walzen.

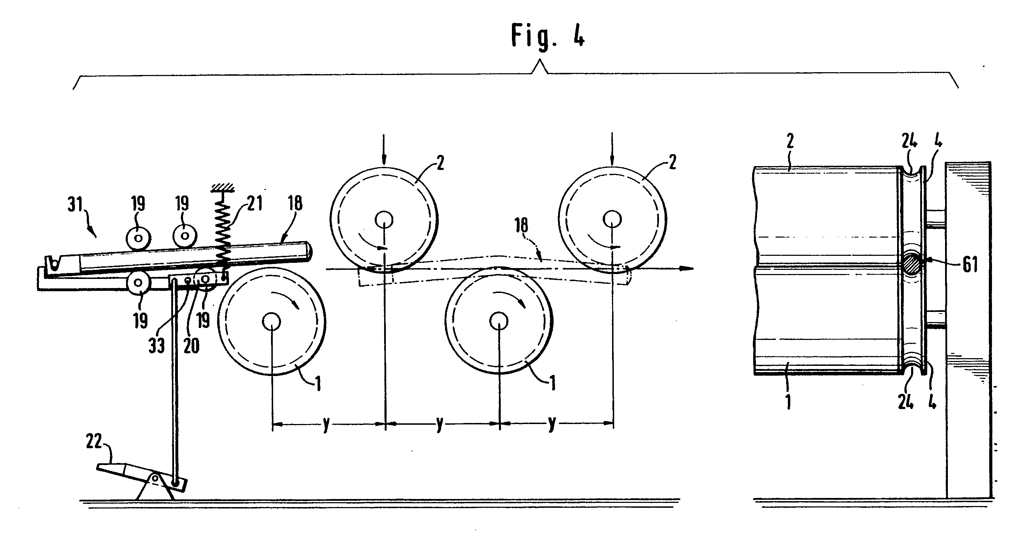

Aus der Zeichnung ist ersichtlich, daß bei hochgefahrener Hubwalze 2 die Rillen 24 der Einzugsscheiben 4 einen Durchzugskanal 61 für die Durchzugsvorrichtung bilden, der in der Zeichnung einen kreisförmigen Querschnitt erkennen läßt. In diesem Zusammenhang ist jedoch darauf hinzuweisen, wie aus Fig. 4 ersichtlich ist, daß der Durchzugskanal in Längsrichtung keineswegs ein geschlossenes Gebilde ist, sondern nur von den Rillen 24 der stationären Walzen von unten und von den Rillen 24 der hochgefahrenen Hubwalzen 2 von oben begrenzt wird.

Die Fig. 2a und 2b zeigen Ansichten der Durchzugsvorrichtung, die aus dem elastischen Stab 18 mit einem lösbar daran befestigten Klemmteil 25 besteht. Der Stab 18 ist ein mit einem Gummi 6 überzogenes Kunststoff-Rohr 5, in dem ein Gewindestück 28 befestigt ist, in welches das Klemmteil 25 eingeschraubt ist. Der Gummi 6 wird entweder auf das Kunststoff-Rohr 5 aufgeklebt oder auf dieses aufvulkanisiert. Das Gewindestück 28 ist mit der Innenwand des Kunststoff-Rohrs 5 beispielsweise verklebt. Der Stab 18 bildet zusammen mit den Einzugsscheiben 4 mit ihren Rillen 24 die Durchzugsanordnung für die Folienbahn 3, wenn die Hubwalzen 2 hochgefahren sind, Diese formen dann zusammen mit den Einzugsscheiben 4 und den Rillen 24 der stationären Walzen 1 den Durchzugskanal 61 für den Stab. Das zylindrische Klemmteil 25 besitzt einen seitlichen Eingabespalt 26, der sich zur Stirnfläche des Klemmteils 25 hin konisch aufweitet. Der Eingabespalt 26 verläuft parallel und unterhalb einer Längsmittellinie 7 des Stabes 18. Die konische Aufweitung des Eingabespalts 26 erleichtert das Einführen der Folienbahn 3 in das Klemmteil 25. Die gezeigte Ausführungsform des Klemmteils 25 ist insbesondere für dickere Folien geeignet, die eine Foliendicke im Bereich von etwa 0,15 bis 0,80 mm besitzen können.

Eine Klemmplatte 8 mit einer Oberflächenrändelung bildet einen Teil der Grundfläche 30 des Eingabespalts 26 und ist in das Klemmteil 25 eingepaßt. Senkschrauben 11 halten die Klemmplatte 8 fest. Das Kunststoff-Rohr 5 des Stabes 18 ist etwa zehnmal so lang wie das Klemmteil 25. Der Transport der Durchzugsvorrichtung durch die Durchzugsanordnung geschieht stets in der Weise, daß der Stab 18 mit dem Kunststoff-Rohr 5 voran in den Durchzugskanal 61 eingeführt wird.

Von dem Eingabespalt 26 zweigt schräg nach oben eine Nut 29 ab, in der zwei Rollen 9 und 10 angeordnet sind, die entlang der schiefen Ebene der Nut 29 abrollen können. Die untere Rolle 9 ist eine Kunststoffrolle und die obere Rolle 10 eine Stahlrolle. In der waagerechten Lage des Stabes 18, in der dieser in den Durchzugskanal 61 eingeführt wird, drückt die schwerere obere Stahlrolle 10 die leichtere untere Kunststoffrolle 9 unter dem Einfluß der Schwerkraft gegen die Grundfläche 30 des Eingabespalts 26, wodurch die in den Eingabespalt 26 eingeschobene Seitenkante der Folienbahn 3 selbstklemmend durch die Rolle 9 festgehalten wird. Die Rollen 9 und 10 können sich in der Nut 29 frei bewegen, und sobald die Folienbahn 3 mit der Seitenkante durch den Eingabespalt 26 eingeschoben wird, werden die Rollen 9 und 10 in der schrägen Nut 29 angehoben. Zug an der Folienbahn 3 in die Richtung weg von dem Stab 18 führt zu der schon vorhin erwähnten Selbstklemmung der Folienbahn 3 durch die Rolle 9. Das Lösen der Folienbahn 3 aus dem Klemmteil 25 geschieht durch Zug in Richtung des Stabes 18, wodurch die beiden Rollen 9 und 10 innerhalb der schrägen Nut 29 angehoben werden und dadurch die Folienbahn 3 freigeben.

In der Seitenansicht nach Fig. 2b sind Seitenteile 12 aus Kunststoff zu erkennen, die die Nut 29 in dem Klemmteil 25 zu beiden Seiten begrenzen und die durch Senkschrauben 11 miteinander verbunden sind.

Eine andere Ausführungsform der Durchzugsvorrichtung in Gestalt des Stabes 18 ist in den Fig. 3a bis 3c gezeigt. Das Kunststoff-Rohr 5 mit dem Gummi 6 und dem eingeklebten Gewindestück 28 gleicht dem Kunststoff-Rohr 5 der in den Fig. 2a und 2b dargestellten Ausführungsform der Durchzugsvorrichtung. Das Klemmteil 13, das in das Gewindestück 28 eingeschraubt ist, unterscheidet sich von dem Klemmteil 25 der zuvor beschriebenen Ausführungsform, da es für dünnere Folien mit einer Dicke von 150 μm und weniger besonders geeignet ist. Das Klemmteil 13 besteht aus einem halbierten Rohr mit einem Klemmsteg 32 und einer Klemmscheibe 14, die um eine Drehachse 15 drehbar ist, die in der Rohrwand des halbierten Rohrs gelagert ist. Der Klemmsteg 32 weist eine dem Umfang der Klemmscheibe 14 angepaßte Krümmung auf. Um den Klemmsteg 32 herum ist das Rohr ausgespart. Durch diese Aussparung ist es möglich, die Folienbahn 3 leicht zusammengerafft zwischen dem Klemmsteg 32 und der Klemmscheibe 14 einzuklemmen, da die Klemmscheibe 14 einen Klemmspalt bis auf den Grund des Rohres freigibt. Durch Zug an der Folienbahn 3 verdreht sich die Klemmscheibe 14 und führt zur Selbstklemmung zwischen dem Klemmsteg 32 und der Klemmscheibe 14. Die Folienbahn wird durch entgegengesetzten Zug an ihrem kurzen Ende aus der Selbstklemmung zwischen dem Klemmsteg 32 und der Klemmscheibe 14 gelöst.

Der Eingabespalt 27 für die Folienbahn 3 verläuft senkrecht zu der Längsmittellinie 7 des Stabes 18, wie aus Fig. 3a ersichtlich ist. Zu beiden Seiten der Klemmscheibe 14 sitzen auf der Drehachse 15 Unterlegscheiben 16,16 auf, die die Klemmscheibe zentrisch innerhalb des Rohres halten.

Wie aus Fig. 3b zu erkennen ist, befindet sich ein Anschlagstift 17 auf der von dem Klemmsteg 32 abgewandten Seite der Klemmscheibe 14, der die Drehbewegung der Klemmscheibe 14 begrenzt, so daß an der Klemmstelle zwischen dem Klemmsteg 32 und der Klemmscheibe 14 der Andruck gegen die dazwischen eingeklemmte Folienbahn nicht so groß werden kann, daß diese Schaden erleidet.

Fig. 4 zeigt schematisch eine Einzugsvorrichtung 31 für den Stab 18. Diese Einzugsvorrichtung 31 besteht beispielsweise aus zwei oberen Paaren von Führungskugellagern 19 und zwei unteren Paaren von Führungskugellagern 19, zwischen denen der Stab 18 eingelegt wird. In Einzugsrichtung ist zwischen den unteren Paaren der Führungskugellager 19 eine Stabauflage 20 angeordnet, die um eine Achse 33 schwenkbar ist. Das in Einzugsrichtung vordere Ende der Stabauflage 20 ist mit einer Zugfeder 21 und das hintere Ende über ein Gestänge mit einem Fußhebel 22 zum Verschwenken der Stabauflage 20 verbunden. An der Stirnseite der Längsstreckanlage, bei der die Hubwalzen 2 hochgefahren sind, wird der Stab 18 mit dem Klemmteil nach hinten, in die Einzugsvorrichtung 31 eingelegt. Nachdem die Folienbahn in das Klemmteil des Stabes 18 eingeklemmt ist, wird der Fußhebel 22 betätigt und die Stabauflage 20 abgesenkt. Dadurch sinkt der Stab 18 gleichfalls ab und gelangt in den Durchzugskanal 61, der durch die Rillen 24,24 der Einzugsscheiben 4 der Walzen 1 und der hochgefahrenen Hubwalzen 2 gebildet wird. Die umlaufende erste Walze 1 der Längsstreckanlage transportiert dann den Stab 18 in den Durchzugskanal 61. Der Stab 18 zieht die Folienbahn über die umlaufenden stationären Walzen 1.

Die Länge des Stabes 18 wird aus Sicherheitsgründen mehr als doppelt so groß wie der Abstand zweier benachbarter Walzen gewählt. Beträgt der Abstand der ersten stationären Walze 1 und der ersten hochgefahrenen Walze 2 gleich y, so beträgt dann die Länge des Stabes 18 im allgemeinen 2 y plus 100 bis 200 mm. Wird der Stab 18 bei seinem Transport durch den Durchzugskanal 61 von drei Walzen gleichzeitig erfaßt, wie dies in Fig. 4 der Fall bei dem strichpunktiert dargestellten Stab 18 ist, so übt er die größte Zugkraft auf die Folienbahn aus, da sich durch die zwischen den Walzen erfolgte Verbiegung des Stabes 18 die Haftreibung stark erhöht. Diese Verbiegung kommt dadurch zustande, daß, wie schon eingangs beschrieben wurde, die Hubhöhe der Hubwalzen 2 etwas kleiner als der Walzendurchmesser der Hubwalzen 2 bzw. der stationären Walzen 1 ist. Wird die Hubhöhe beispielsweise nur um 2mm kleiner als der Walzendurchmesser gewählt, tritt schon die gewünschte Verbiegung des Stabes 18 auf, die in Fig. 4 etwas vergrößert dargestellt ist.

Am Ausgang der Längsstreckanlage 23 wird der Stab 18, je nach seiner Geschwindigkeit, entweder von Hand oder in einem Kasten aufgefangen, der nicht dargestellt ist. Die Folienbahn kann dann in der zuvor beschriebenen Weise aus dem Klemmteil gelöst werden und der Stab 18 wieder am Eingang der Längsstreckanlage 23 aufbewahrt werden. Nach dem Durchzug der Folienbahn durch die Längsstreckanlage 23 werden die angehobenen Hubwalzen 2 in ihre Betriebsstellung abgefahren und die Folienproduktion fortgesetzt.

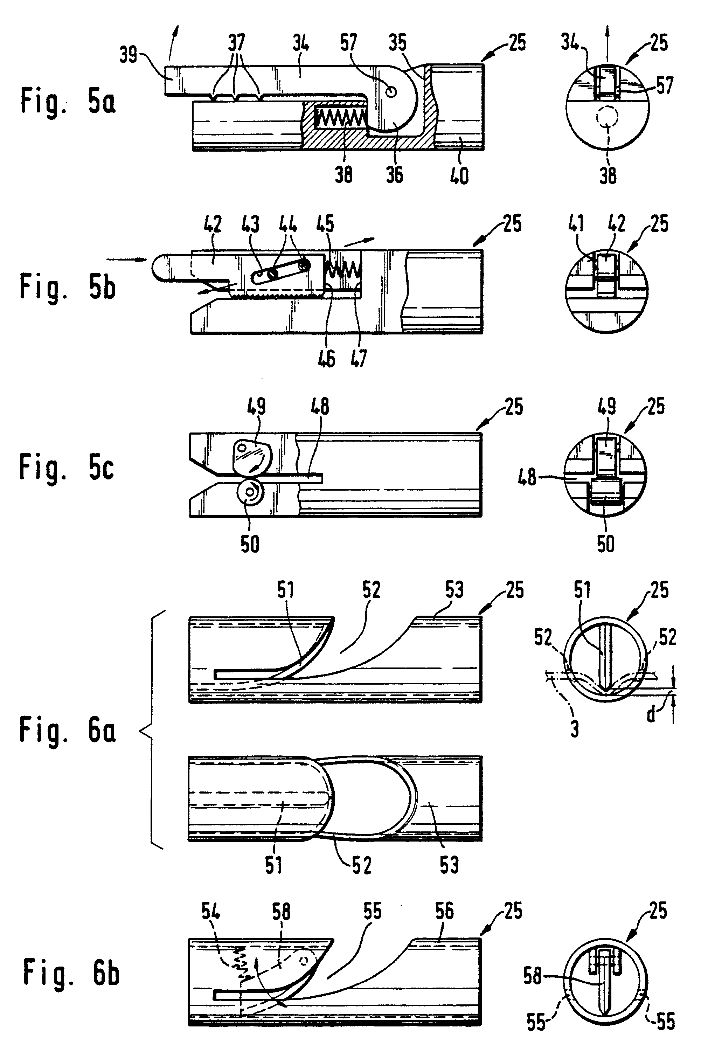

Die Fig. 5a bis 5c zeigen schematisch jeweils ein Klemmteil 25, das für die voranstehend erwähnten dickeren Folien geeignet ist und mit dem nicht gezeigten Kunststoffrohr des Stabes 18 verbunden ist. Das Klemmteil 25 gemäß der Fig. 5a besteht aus einem winkelförmigen Klemmelement 34, von dem ein Schenkel als Kurventeil 36 ausgebildet ist, während der andere Schenkel 39 geradlinig geformt ist. Das Kurventeil 36 ist um eine Achse 57 in einer Ausnehmung 35 eines Basisteils 40 des Klemmteils 25 verschwenkbar. In einer Bohrung des Basisteils 40 ist eine Druckfeder 38 angeordnet, die gegen das Kurventeil 36 anliegt und dadurch ein Drehmoment auf das Klemmelement 34 in einer Weise ausübt, daß die Unterseite des Schenkels 39 des Klemmelements 34 gegen das Basisteil 40 angedrückt wird. Die Unterseite des Schenkels 39 ist mit Dornen 37 zum Festhalten der Folie ausgerüstet. Das Klemmelement 34 wird zum Einlegen der Folie hochgeklappt und diese eingelegt. Anschließend wird das Klemmteil wieder niedergedrückt und durch die Druckfeder 38 in seiner Schließlage festgehalten. Die Dorne halten die Folie während des Durchzugs des mit dem Rohr verbundenen Klemmteils 25 durch die Durchzugsanordnung fest. Eine weitere Ausführungsform des Klemmteils 25 ist schematisch in Fig.5b dargestellt. Dieses Klemmteil enthält in der oberen Hälfte eine senkrechte Nut 41, wie die Seitenansicht des zylindrischen Klemmteils 25 zeigt. In der Nut 41 ist ein Flachsteg 42 angeordnet, der eine schräge Ausnehmung 43 aufweist, in die zwei lagefeste Stifte 44 hineinragen. Die Bodenfläche des Flachstegs 42 ist gerändelt, um eine eingeschobene Folie sicher festhalten zu können. Eine Druckfeder 45 liegt mit einem Ende gegen die Rückseite 46 des Flachstegs 42 und mit dem anderen Ende gegen die Rückseite 47 der Nut 41 an. Die Unterseite des Flachstegs 42 bildet mit der gerändelten Grundfläche der Nut 41 einen Eingabespalt für die Folienbahn. Zum Festklemmen der Folienbahn wird der Flachsteg 42 gegen die Federkraft der Feder 45 gedrückt und entlang der schiefen Ebene, die durch die Verbindungsebene der beiden Stifte 44 festgelegt ist, nach oben verschoben. Dadurch wird der Eingabespalt zwischen dem Flachsteg 42 und der Grundfläche der Nut 41 entsprechend weit geöffnet, so daß die Folienbahn ohne Schwierigkeiten eingelegt werden kann. Die Verschiebungsrichtungen des Flachstegs 42 entlang der schiefen Ebene durch die beiden Stifte 44 sind durch Pfeile angedeutet. Wird der Flachsteg 42 freigegeben, so drückt ihn die Druckfeder 45 auf der schiefen Ebene nach unten, so daß die Unterseite des Flachstegs 42 die eingelegte Folie gegen die Rändelung bzw. Grundfläche andrückt und festhält. Zum Lösen der Folienbahn ist es nur erforderlich, den Flachsteg 42 gegen die Federkraft der Druckfeder 45 zu öffnen. Bei der in Fig. 5c gezeigten schematischen Ansicht eines weiteren Klemmteils 25 ist ein Schlitz 48 vorgesehen, der gegen die Stirnseite des Klemmteils 25 konisch aufgeweitet ist. Oberhalb des Schlitzes 48 ist in einer Ausnehmung des Klemmteils 25 ein Nocken 49 exzentrisch und entgegen der Durchlaufrichtung des Klemmteils 25 durch den Durchzugskanal, wenn dieser mit dem Kunststoffrohr zu der Durchzugsvorrichtung bzw. dem Stab 18 verschraubt ist, schwenkbar gelagert. Unterhalb des Schlitzes 48 ist eine Rolle 50 entgegen der Durchlaufrichtung in einer Ausnehmung des Klemmteils 25 drehbar gelagert. Die Rolle und der Nocken klemmen die zwischen ihnen eingeschobene Folie während des Transports des mit dem Kunststoffrohr verschraubten Klemmteils 25 durch die Durchzugsanordnung fest. Die Selbstklemmung der Folie wird dadurch aufgehoben, daß die Folie in den Schlitz 48 eingeschoben wird, wodurch der Nocken 49 um seine Achse nach oben schwenkt und die Selbstklemmung zwischen dem Nocken und der Rolle aufgehoben wird, so daß die Folie aus dem Schlitz 48 herausgezogen werden kann.

Die Figuren 6a und 6b zeigen weitere Ausführungsformen des Klemmteils 25, das insbesondere für dünnere Folien, wie sie voranstehend angeführt wurden, geeignet ist. Wie die schematische Ansicht, Seitenansicht sowie Draufsicht gemäß Fig. 6a erkennen läßt, besteht das Klemmteil 25 aus einem Rohr mit einem mittig angeordneten feststehenden Schwertsteg 51, dessen Spitze einen Abstand d zu der Innenwand des Rohrs hat. In der Rohrwand sind symmetrisch zu den beiden Seiten des Schwertstegs 51 jeweils ein gebogener Eingabespalt 52 angebracht, der sich von der oberen Rohrkante 53 weg verengt und dessen zu der Rohrkante paralleler Abschnitt oberhalb der Spitze des Schwertstegs 51 verläuft. Die Folienbahn 3 wird durch die beiden Eingabespalte 52,52 durch die Rohrwand hindurch- und um die Spitze des Schwertstegs 51 herumgeführt. Dadurch kommt es zu einer Selbstklemmung der Folienbahn zwischen der Spitze des Schwertstegs 51 und der Stelle der Rohrinnenwand, die der Spitze des Schwertstegs gegenüberliegt.

Bei der Ausführungsform nach Fig. 6b ist das Klemmteil 25 ein Rohr, das mit einem mittig angeordneten, schwenkbaren Schwertsteg 58 ausgerüstet ist, der nahe seinem oberen, der Stegspitze gegenüber liegenden Ende drehbar gelagert ist. Eine Druckfeder 54 liegt gegen die obere Seite des

EP 0 221 524 B1

gebogenen Schwertstegs 58 an und drückt diesen nach unten. Zu beiden Seiten des Schwertstegs 58 ist in der Rohrwand je ein gebogener Eingabespalt 55 vorhanden, der sich von der oberen Rohrkante 56 in Richtung seines zu der Rohrkante parallelen Endabschnitts hin verengt. Die Folienbahn wird in ähnlicher Weise wie bei dem Klemmteil 25 gemäß der Fig. 6a durch die Eingabespalte 55 in der Rohrwand hindurch- und um die Spitze des schwenkbaren Schwertstegs 58 herumgeführt. Die Spitze des federbelasteten Schwertstegs 58 drückt die Folienbahn zusätzlich gegen die Innenseite der Rohrwand an. Diese Ausführungsform ist insbesondere für sehr dünne Folien geeignet, die Dicken von 30 μm und weniger aufweisen.

**Patentansprüche**

1. Durchzugsanordnung für Folien, die durch zumindest eine Längsstreckanlage (23) für Folien, bestehend aus angetriebenen, stationären Walzen (1) und angetriebenen, hochgefahrenen Hubwalzen (2), bei umlaufenden Walzen hindurchtransportiert wird, dadurch gekennzeichnet, daß alle Walzen (1) und Hubwalzen (2) der Längsstreckanlage (23) an derselben ihrer Stirnseiten mit einer Einzugsscheibe (4) ausgerüstet sind, daß bei hochgefahrenen Hubwalzen (2) eine Rille (24) der Einzugsscheiben (4) einen offenen Durchzugskanal (61) für eine Durchzugsvorrichtung bildet, die aus einem elastischen Stab (18) mit einem lösbar befestigten Klemmteil (13; 25) besteht und daß die Länge des Stabes (18) größer als der Abstand zweier benachbarter Walzen (1, 1 bzw. 2, 2) ist, so daß der Stab durch Haftreibung mit den umlaufenden Walzen durch die Längsstreckanlage (23) transportiert wird.

2. Durchzugsanordnung für Folien nach Anspruch 1, dadurch gekennzeichnet, daß der Stab (18) ein mit Gummi (6) überzogenes Kunststoffrohr (5) aufweist, in dem ein Gewindestück (28) befestigt ist, in das das Klemmteil (13; 25) eingeschraubt ist, das Klemmelemente (14; 9, 10; 34; 42; 49, 50; 51; 53) und/oder Federn (38; 45; 54) und/oder Eingabespalte (26; 27; 48; 52; 55) umfaßt und daß die Klemmelemente so angeordnet sind, daß sie eine in das Klemmteil eingeschobene Folienbahn (3) während des Transports des Stabes (18) durch die Längsstreckanlage (23) selbsthemmend bzw. federbelastet festklemmen.

3. Durchzugsanordnung für Folien nach Anspruch 2, dadurch gekennzeichnet, daß das zylinderische Klemmteil (25) einen seitlichen Eingabespalt (26) aufweist, der zur Stirnfläche des Klemmteils (25) hin konisch aufgeweitet ist und parallel zur Längsmittellinie (7) des Stabes (18) verläuft und daß von dem Eingabespalt (26) bei waagerechter Lage des Stabes (18) schräg nach oben eine Nut (29) abzweigt, in der zwei Rollen (9,10) angeordnet sind, die entlang der schiefen Ebene der Nut (29) abrollen, wobei in waagerechter Lage des Stabes (18) die untere Rolle (9) von der oberen Rolle (10) unter Schwerkrafteinfluß gegen die Grundfläche (30) des Eingabespalts (26) gedrückt ist.

4. Durchzugsanordnung für Folien nach Anspruch 2, dadurch gekennzeichnet, daß eine Klemmplatte (8) mit Senkschrauben (11) in dem Klemmteil (25) eingepaßt ist und daß die Klemmplatte (8) einen Teil der Grundfläche (30) des Eingabespalts (26) bildet und gerändelt ist.

5. Durchzugsanordnung für Folien nach Anspruch 2, dadurch gekennzeichnet, daß das Klemmteil (13) aus einem halbierten Rohr mit einem Klemmsteg (32) und einer um eine im halbierten Rohr gelagerten Drehachse (15) drehbaren Klemmscheibe (14) besteht und daß der Klemmsteg (32) eine dem Umfang der Klemmscheibe (14) angepaßte Krümmung aufweist.

6. Durchzugsanordnung für Folien nach Anspruch 5, dadurch gekennzeichnet, daß ein Anschlagstift (17) in dem Klemmteil (13) auf der von dem Klemmsteg (32) abgewandten Seite der Klemmscheibe (14) angeordnet ist und die Drehbewegung der Klemmscheibe (14) begrenzt.

7. Durchzugsanordnung für Folien nach Anspruch 5, dadurch gekennzeichnet, daß der Eingabespalt (27) senkrecht zu der Längsmittellinie (7) des Stabes (18) verläuft.

8. Durchzugsanordnung für Folien nach Anspruch 7, dadurch gekennzeichnet, daß Unterlegscheiben (16,16) auf der Drehachse (15) aufsitzen und die Klemmscheibe (14) zentrisch innerhalb des Rohres halten.

9. Durchzugsanordnung für Folien nach Anspruch 1, dadurch gekennzeichnet, daß eine Einzugsvorrichtung (31) für den Stab (18) vorhanden ist, die obere und untere Paare von Führungskugellagern (19) aufweist, zwischen denen der Stab (18) eingelegt ist, und daß in Einzugsrichtung zwischen den unteren Paaren der Führungskugellager (19) eine Stabauflage (20) angeordnet ist, die um eine Achse (33) schwenkbar ist.

10. Durchzugsanordnung für Folien nach Anspruch 9, dadurch gekennzeichnet, daß das in Einzugsrichtung vordere Ende der Stabauflage (20) mit einer Zugfeder (21) und das hintere Ende über ein Gestänge mit einem Fußhebel (22) zum Verschwenken der Stabauflage (20) verbunden ist.

11. Durchzugsanordnung für Folien nach Anspruch 2, dadurch gekennzeichnet, daß das Klemmteil (25) aus einem winkelförmigen Klemmelement (34) mit einem Kurventeil als einem Schenkel (36) besteht, der in einer Ausnehmung (35) des Basisteils (40) des Klemmteils (25) um eine Achse (57) verschwenkbar ist, daß die Unterseite des anderen Schenkels (39) des Klemmelements (34) Dornen (37) zum Festhalten der Folie aufweist und daß eine Druckfeder (38) gegen das Kurventeil (36) anliegt und das Klemmelement mit der Unterseite des Schenkels (39) gegen das Basisteil (40) andrückt.

12. Durchzugsanordnung für Folien nach Anspruch 2, dadurch gekennzeichnet, daß das Klemmteil (25) in der oberen Hälfte eine senkrechte Nut (41) enthält, in der ein Flachsteg (42) angeordnet ist, der eine schräge Ausnehmung (43) aufweist, in die zwei Stifte (44) hineinragen und daß eine Druckfeder (45) mit einem Ende gegen die Rückseite (46) des Flachstegs (42) und mit dem anderen Ende gegen die Rückseite (47) der Nut (41) anliegt.

13. Durchzugsanordnung für Folien nach Anspruch 12, dadurch gekennzeichnet, daß die Bodenfläche des Flachstegs (42) gerändelt ist.

14. Durchzugsanordnung für Folien nach Anspruch 2, dadurch gekennzeichnet, daß das Klemmteil (25) einen Schlitz (48) enthält, daß oberhalb des Schlitzes (48) in einer Ausnehmung des Klemmteils (25) ein Nocken (49) exzentrisch und entgegen der Durchlaufrichtung schwenkbar gelagert ist und daß unterhalb des Schlitzes (48) eine Rolle (50) entgegen der Durchlaufrichtung drehbar gelagert ist und daß die Rolle und der Nocken die zwischen ihnen eingeschobene Folie während des Transports des mit dem Kunststoffrohr verschraubten Klemmteils (25) durch den Durchzugskanal (61) festklemmen.

15. Durchzugsanordnung für Folien nach Anspruch 2, dadurch gekennzeichnet, daß das Klemmteil (25) ein Rohr mit einem mittig angeordneten, feststehenden Schwertsteg (51) ist, dessen Spitze einen Abstand d zu der Innenwand des Rohrs hat und daß in der Rohrwand symmetrisch zu beiden Seiten des Schwertstegs jeweils ein gebogener Eingabespalt (52) angebracht ist, der sich von der Rohrkante (53) weg verengt und dessen zu der Rohrkante paralleler Endabschnitt oberhalb der Spitze des Schwertstegs verläuft.

16. Durchzugsanordnung für Folien nach Anspruch 2, dadurch gekennzeichnet, daß das Klemmteil (25) ein Rohr mit einem mittig angeordneten, schwenkbaren Schwertsteg (58) ist, der nahe seinem oberen, der Stegspitze gegenüberliegenden Ende drehbar gelagert ist und daß eine Druckfeder (54) gegen die obere Seite des gebogenen Schwertstegs (58) anliegt und diesen nach unten drückt.

17. Durchzugsanordnung für Folien nach Anspruch 16, dadurch gekennzeichnet, daß zu beiden Seiten des Schwertstegs (58) in der Rohrwand je ein gebogener Eingabespalt (55) vorhanden ist, der sich von der Rohrkante (56) in Richtung seines zu der Rohrkante parallelen Endabschnitts hin verengt.

**Claims**

1. A film drawing through apparatus which is transported through at least one forward stretching installation (23) for films comprising driven, stationary rolls (1) and driven, raised lift rolls (2), while said rolls are rotating, characterized in that each of said rolls (1) and of said lift rolls (2) of said forward stretching installation (23) is equipped, at the same end side, with an intake plate (4), that in the raised position of said lift rolls (2) a groove (24) provided in said intake rolls (4) forms an open drawing through channel for a drawing through apparatus comprising a flexible rod (18) and a clamp component (25, 13) removably fastened thereto, and that the length of the rod (18) is greater than the distance between two neighbouring rolls (1, 1 and 2, 2, respectively), such that said rod is transported through said forward stretching installation (23) as a result of static friction with the rotating rollers.

2. The film drawing through apparatus of claim 1, characterized in that said rod (18) comprises a plastic tube (5) having a rubber coating (6) on its outside surface, to which a threaded section (28) is fastened, the clamp component (13, 25) comprising clamp elements (14, 9, 10, 34, 42, 49, 50, 51, 53) and/or springs (38, 45, 54) and/or insertion slits (26, 27, 48, 52, 55) being screwed into said threaded section and in that a film web (3) inserted into said clamp component is held in a self-locking or spring-loaded manner during the transport of the rod (18) through the forward stretching installation (23).

3. The film drawing through apparatus of claim 2, characterized in that said cylindrical clamp component (25) includes a lateral insertion slit (26) which opens out conically toward the front end of said film clamp component (25) and which extends parallel to the longitudinal axis (7) of said rod (18), and in that a slot (29) branches off from the insertion slit (26), said slot (29) having an upward inclination when said rod (18) is in the horizontal position and two rollers (9, 10) being arranged in said slot (29), which roll along the inclined plane of said slot (29) whereby in the horizontal position of said rod (18) gravity causes the upper roller (10) to press the lower roller (9) against the base surface (30) of the insertion slit (26).

4. The film drawing through apparatus of claim 2, characterized in that a clamp plate (8) is fastened to said clamp component (25) by means of countersunk screws (11) and that said clamp plate (8) forms a portion of said base surface (30) of said insertion slit (26) and is knurled.

5. The film drawing through apparatus of claim 2, characterized in that said clamp component (13) comprises a halved tube with a clamping bar (32) and a clamping disk (14) which can be rotated about a swivel pin (15) installed in said halved tube, and in that the curvature of said clamping bar (32) reflects the circumference of said clamping disk (14).

6. The film drawing through apparatus of claim 5, characterized in that a stop pin (17) limiting the rotation of said clamping disk (14) is provided in the clamp component (13) on that side of said clamping disk (14) which faces away from said clamping bar (32).

7. The film drawing through apparatus of claim 5, characterized in that the insertion slit (27) extends perpendicularly to the longitudinal center line (7) of the rod (18).

8. The film drawing through apparatus of claim 7, characterized in that spacing disks (16, 16) are seated on said swivel pin (15) and hold said clamping disk (14) in a central position within said tube.

9. The film drawing through apparatus of claim 1, characterized in that an insertion unit (31) for the rod (18) is provided, which comprises upper and lower pairs of guide bearings (19) between which the rod (18) is inserted, and in that a rod support (20) which can be pivoted about an axle (33) is installed in the insertion direction between the lower pairs of guide bearings (19).

10. The film drawing through apparatus of claim 9, characterized in that the front end of said rod support (20), seen in the insertion direction, is connected to a tension spring (21) and the back end is connected by way of gears to a foot pedal (22) for displacing said rod support (20).

11. The film drawing through apparatus of claim 2, characterized in that said clamp component (25) is comprised of an angular clamp element (34), one branch (36) of which is formed by a curved section which can be pivoted about an axle (57) in a recess (35) of the base section (40) of said clamp component (25), that the underside of the second branch (39) of said clamp element (34) is equipped with mandrels (37) to hold the film firmly, and that a compression spring (38) is adjacent to said curved section (36) and presses the clamp element with the underside of said branch (39) against said base section (40).

12. The film drawing through apparatus of claim 2, characterized in that the upper half of said clamp component (25) comprises a vertical slot (41), in which a flat bar (42) having a slanting recess (43) is installed, with two pins (44) protruding into said recess (43), and in that one end of a compression spring (45) rests against the rear side (46) of said flat bar (42) and the other end of said spring rests against the rear side (47) of said slot (41).

13. The film drawing through apparatus of claim 12, characterized in that the base of said flat bar (42) is knurled.

14. The film drawing through apparatus of claim 2, characterized in that the clamp component (25) is provided with a slit (48), that above said slit (48), in a recess of said clamp component (25), a cam (49) is provided, which is installed off-center and is movable in a direction opposite to the direction of transport, that below said slit (48) a roller (50) is installed which is rotatable in a direction opposite to the direction of transport, and in that the film inserted between said roller and said cam is firmly clamped by said roller and cam during the transport of said clamping component (25) screwed to said plastic tube through the drawing through channel (61).

**15.** The film drawing through apparatus of claim 2, characterized in that said clamp component (25) comprises a tube with a centrally arranged, stationary sword bar (51) whose tip has a distance d from the inside wall of the tube, and that a bowed insertion slit (52) is provided in the inside tube wall on each side of said sword bar (51) and symmetrically to the latter, said bowed slits (52) narrowing from the upper edge of the tube, and the end section of these slits, which is parallel to the upper tube edge, running above the tip of said sword bar.

**16.** The film drawing through apparatus of claim 2, characterized in that said clamp element (25) comprises a tube with a centrally arranged, pivotal sword bar (58) which is pivotally hinged close to its upper end, opposite the tip of said bar, and that a compression spring (54) urges against the upper side of said bowed sword bar (58) and presses the latter down.

**17.** The film drawing through apparatus of claim 16, characterized in that a curved insertion slit (55) is provided in the tube wall on either side of the sword bar (58), which slit becomes narrower from the tube edge (56) towards its end section running parallel to the edge of the tube.

## Revendications

**1.** Dispositif d'enfilage pour des feuilles en bande qui est transporté à travers au moins une installation d'étirage longitudinal (23) pour bandes de feuille, composée de rouleaux fixes entraînés (1) et de rouleaux relevables (2) aussi entraînés, pendant la rotation des rouleaux, caractérisé en ce que tous les rouleaux (1) et les rouleaux relevables (2) de l'installation d'étirage longitudinal (23) sont équipés d'une poulie d'engagement sur leurs côtés frontaux, en ce que, lorsque les rouleaux relevables (2) sont relevés, les gorges (24) des poulies d'engagement (4) forment un canal d'enfilage ouvert (6) pour un dispositif d'enfilage qui est composé d'une baguette élastique (18) à laquelle est fixée une partie "coinceuse" (13 ; 25) fixée par une liaison démontable, et en ce que la longueur de la baguette (18) est supérieure à la distance entre deux rouleaux voisins (1, 1 ou 2, 2),de sorte que la baguette est transportée dans l'installation d'étirage longitudinal, par frottement d'adhérence sur les rouleaux en rotation.

**2.** Dispositif d'enfilage pour feuilles selon la revendication 1, caractérisé en ce que la baguette (18) se compose d'un tube en matière plastique (5) revêtu de caoutchouc (6), dans lequel est fixée une pièce filetée (28) dans laquelle est vissée la partie "coinceuse" (13 ; 25) qui comprend des éléments "coinceurs" (14 ; 9, 10 ; 34 ; 42 ; 49, 50 ; 51 ; 53) et/ou des ressorts (38 ; 45 ; 54) et/ou des fentes d'introduction (26 ; 27 ; 48 ; 52 ; 55), et les éléments "coinceurs" sont disposés de manière à coincer une bande de feuille engagée dans la partie "coinceuse", par autocoincement ou par la sollicitation d'un ressort, pendant le transport de la baguette à travers l'installation d'étirage longitudinal.

**3.** Dispositif d'enfilage pour feuilles selon la revendication 2, caractérisé en ce que la partie "coinceuse" cylindrique (25) présente une fente d'introduction latérale (26) qui s'élargit avec une forme conique en direction de la surface frontale de la partie "coinceuse" et s'étend parallèlement à l'axe médian longitudinal (7) de la baguette (18) et en ce qu'il est prévu une rainure (29) qui part de la fente d'introduction (26) en s'étendant obliquement vers se haut, dans la position horizontale de la baguette, et dans laquelle sont disposés deux rouleaux (9, 10) qui roulent le long du plan incliné de la rainure (29), le rouleau inférieur (9) étant pressé contre la surface de fond (30) de la fente d'introduction (26) par le rouleau supérieur (10), sous l'influence de la gravité.

**4.** Dispositif d'enfilage pour feuilles selon la revendication 2, caractérisé en ce qu'une plaque de coincement (8) est ajustée dans la partie "coinceuse" (25) à l'aide de vis (11) à tête fraisée dans la partie "coinceuse" (25) et en ce que la plaque "coinceuse" (8) forme une partie de la surface de fond (30) de la fente d'introduction (26) et est moletée.

**5.** Dispositif d'enfilage pour feuilles selon la revendication 2, caractérisé en ce que la partie "coinceuse" (13) est composée d'un tube divisé en deux, comprenant une nervure "coinceuse" (32) et un disque "coinceur" (14), qui peut tourner autour d'un axe de rotation (15) tourillonné dans le tube coupé à moitié, et en ce que la nervure "coinceuse" (32) présente une courbure adaptée à la périphérie du disque "coinceur" (14).

**6.** Dispositif d'enfilage pour feuilles selon la revendication 5, caractérisé en ce qu'un doigt de butée (17) est disposé dans la partie "coinceuse" (13), sur le côté du disque "coinceur" (14) qui est le plus éloigné de la nervure "coinceuse" (32) et limite ainsi le mouvement de rotation du disque "coinceur" (14).

7. Dispositif d'enfilage pour feuilles selon la revendication 5, caractérisé en ce que la fente d'introduction (27) s'étend perpendiculairement à l'axe médian longitudinal (7) de la baguette (18).

8. Dispositif d'enfilage pour feuilles selon la revendication 7, caractérisé en ce que des rondelles (16, 16) sont montées sur l'axe de rotation (15) et maintiennent le disque "coinceur" (14) en position centrale à l'intérieur du tube.

9. Dispositif d'enfilage pour feuilles selon la revendication 1, caractérisé en ce qu'il est prévu un dispositif d'engagement (31) pour la baguette (18), ce dispositif comprenant des paires supérieures et inférieures de roulement à billes de guidage (19) entre lesquels on place la baguette (18), et en ce que, entre les paires inférieures des roulements à billes de guidage (19), dans le sens de l'engagement, est disposé un appui de baguette (20) qui peut pivoter autour d'un axe (33).

10. Dispositif d'enfilage pour feuilles selon la revendication 9, caractérisé en ce que l'extrémité avant, dans le sens de l'engagement, de l'appui de baguettes (20) est reliée à un ressort de traction (21) et l'extrémité arrière est reliée, par l'intermédiaire d'une timonerie, à une pédale (22) servant à faire pivoter l'appui de baguette (20).

11. Dispositif d'enfilage pour feuilles selon la revendication 2, caractérisé en ce que la partie "coinceuse" (25) est composée d'un élément "coinceur" (34) en forme d'équerre, possédant une partie formant came qui constitue une branche (36) qui est montée pour pivoter autour d'un axe (57) dans un évidement (35) de la partie de base (40) de la partie "coinceuse" (25), en ce que la face inférieure de l'autre branche (39) de l'élément "coinceur" (34) présente des picots (37) pour retenir la feuille, et en ce qu'un ressort de compression (38) est en appui contre la partie came (36) et presse l'élément "coinceur" contre la partie de base (40) par la face inférieure de la branche (39).

12. Dispositif d'enfilage pour feuilles selon la revendication 2, caractérisé en ce que la partie "coinceuse" (25) renferme dans la moitié supérieure une rainure verticale (41) dans laquelle est disposée une plaquette plate (42) qui présente elle-même un évidement oblique (43) dans lequel sont engagées deux chevilles (44) et en ce qu'un ressort de compression (45) est en appui par une extrémité contre la face arrière (46) de la plaquette plate (42) et par son autre extrémité contre le côté arrière (47) de la rainure (41).

13. Dispositif d'enfilage pour feuilles selon la revendication 12, caractérisé en ce que la surface inférieure de la plaquette plate (42) est moletée.

14. Dispositif d'enfilage pour feuilles selon la revendication 2, caractérisé en ce que la partie "coinceuse" (25) présente une fente (48), en ce qu'une came (49) est montée au-dessus de la fente (48) dans un évidement de la partie "coinceuse" (25), de façon à pouvoir pivoter excentriquement et dans le sens opposé du sens de l'enfilage, et en ce qu'au dessous de la fente (48), un rouleau (50) est monté pour pouvoir tourner en sens opposé du sens de l'enfilage, et en ce que le rouleau et la came coincent la feulle engagée entre eux pendant que la partie "coinceuse" (25) assemblée par vissage au tube en matière plastique est transportée dans le canal d'enfilage (61).

15. Dispositif d'enfilage pour feuilles selon la revendication 2, caractérisé en ce que la partie "coinceuse" (25) est un tube muni d'une nervure (51) en forme de lame fixe, disposé au milieu, dont la pointe se trouve à une distance 'd' de la surface interne du tube et en ce que, dans la paroi du tube, symétriquement des deux côtés de la nervure en forme de lame, sont pratiquées des fentes d'introduction courbes (52), dont chacune se rétrécit en partant du bord (53) du tube et dont le segment terminal parallèle à la génératrice du tube s'étend au-dessus du niveau de la pointe de la nervure en forme de lame.

16. Dispositif d'enfilage pour feuilles selon la revendication 2, caractérisé en ce que la partie "coinceuse" (25) est un tube muni d'une lame (58) placée en position centrale et pivotante, qui est montée rotative a proximité de son extrémité supérieure, qui est à l'opposé de la pointe de la lame, et en ce qu'un ressort de compression (54) est appuyé contre la face supérieure de la lame courbe (58),
    et repousse cette dernière vers le bas.

17. Dispositif d'enfilage pour feuilles selon la revendication 16, caractérisé en ce que de chaque côté de la lame (58) est pratiquée, dans la paroi du tube, une fente d'introduction courbe (55) qui se rétrécit à partir de la génératrice (56) du tube en direction de son segment terminal parallèle à la génératrice du tube.

Fig. 1b

Fig. 1a

Fig. 2b

Fig. 2a

Fig. 3c

Fig. 3a

Fig. 3b

Fig. 4

EP 0 221 524 B1

Fig. 5a

Fig. 5b

Fig. 5c

Fig. 6a

Fig. 6b